# EUROPEAN PATENT SPECIFICATION

(11) **EP 2 566 091 B1**
(45) Date of publication and mention of the grant of the patent: **31.12.2014**
(21) Application number: 12194200.7
(22) Date of filing: 19.06.2008
(51) Int. Cl.: H04L 5/00, H04L 5/02, H04W 48/16, H04L 25/03, H04L 1/00

(54) **METHOD AND DEVICE FOR CANDIDATE CONTROL CHANNELS**
VERFAHREN UND EINRICHTUNG FÜR KANDIDATSTEUERKANÄLE
PROCÉDÉ ET DISPOSITIF POUR DES CANAUX DE COMMANDE CANDIDATS

(30) Priority: 20.06.2007 US 945212 P; 02.06.2008 US 131170
(43) Date of publication of application: 06.03.2013
(62) Divisional of application: 12173758.9
(73) Proprietor: Motorola Mobility LLC, Libertyville, IL 60048 (US)
(72) Inventor: Love, Robert, Barrington, IL 60010 (US); Blankenship, Yufei W., Kildeer, IL 60047 (US); Classon, Brian, Palatine, IL 60067 (US); Kuchibhotla, Ravi, Gurnee, IL 60031 (US)
(74) Representative: Boult Wade Tennant

(56) References cited:
- EP-A2- 1 971 175
- MOTOROLA: "3GPP TSG RAN1 #48 R1-070787: E-UTRA DL L1/L2 Control Channel Design", , 12 February 2007 (2007-02-12), XP002512719, Retrieved from the Internet: URL:http://pddocserv/specdocs/data/standar ds/telecom/3GPP-drafts/ftp/tsg_ran/WG1_RL1 /TSGR1_48/Docs/R1-070787%20DL_L1L2CCH_desi gn_.doc [retrieved on 2009-01-29]
- "E-UTRA DOWNLINK CONTROL CHANNEL STRUCTURE AND TP", 3RD GENERATION PARTNERSHIP PROJECT (3GPP); TECHNICALSPECIFICATION GROUP (TSG) RADIO ACCESS NETWORK (RAN); WORKINGGROUP 1 (WG1), XX, XX, no. R1-060378, 13 February 2006 (2006-02-13), pages 1-8, XP002458193,
- "Way Forward on Downlink Control Signaling", , 14 February 2007 (2007-02-14), XP002512718, Retrieved from the Internet: URL:http://www.3gpp.org/ftp/tsg_ran/WG1_RL 1/TSGR1_48/Docs/R1-081223.zip [retrieved on 2009-01-29]

## Description

### Field of the Invention

This invention relates in general to wireless communication and more particularly to control channel management for wireless communication base units and devices.

### Background

Typically in communication systems such as Code Division Multiple Access (CDMA) and, more particularly, CDMA evolutions such as wideband CDMA (WCDMA) and Third Generation Partnership Project Long Term Evolution (3GPP LTE), assigned channels are employed for sending data and also for control signaling of the system. Control signals are used for both the forward link transmissions, also known as the downlink (DL) transmission, from a network to user equipment (UE), and reverse link transmission, also known as uplink (UL) transmissions, from the UE to the network. These control signals can be transmitted in control channels. In systems wherein the control channel is comprised of an aggregate of control channel elements (CCEs), the user equipment must identify from a large group of control channel elements the relatively few control channel elements intended for the particular user equipment. It has been proposed that such identification be done in a blind detect operation, wherein every possible CCE and CCE combination is considered to detect the particular control channel constituents intended for a particular UE.

While the process of dispersing control channel elements provides advantages such as reductions in interference by adjacent base stations of a cellular system, the process of identifying CCEs can introduce substantial delay, increase power consumption, and use significant processing resources. Accordingly, it is desirable to provide improved control channel management.

A 3GPP submission by Motorola entitled 'E-UTRA DL L1/L2 Control Channel Design', 3GPP TSG RAN1 #48, R1-070787, [online], 12 February 2007 considers the downlink L1/L2 non-persistent control channel (CCH) design.

A 3GPP submission by Motorola entitled 'E-UTRA Downlink Control Channel Structure and TP' 3GPP TSG RAN1 #44, Rl-060378, [online], 13 February 2006, proposes a control channel structure for OFDMA downlink with the goal of minimizing control overhead while ensuring reliable decoding performance.

### Summary

In accordance with the present invention, there is provided a method in user equipment for identifying one or more candidate control channel elements for control information and a user equipment as recited in the accompanying claims.

### Brief Description of the Drawings

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.
FIG. 1 illustrates a communication system.
FIG. 2 illustrates a subframe used in the system of FIG. 1.
FIG. 3 illustrates a control region of the subframe.
FIG. 4 illustrates an atlernate control region of a subframe.

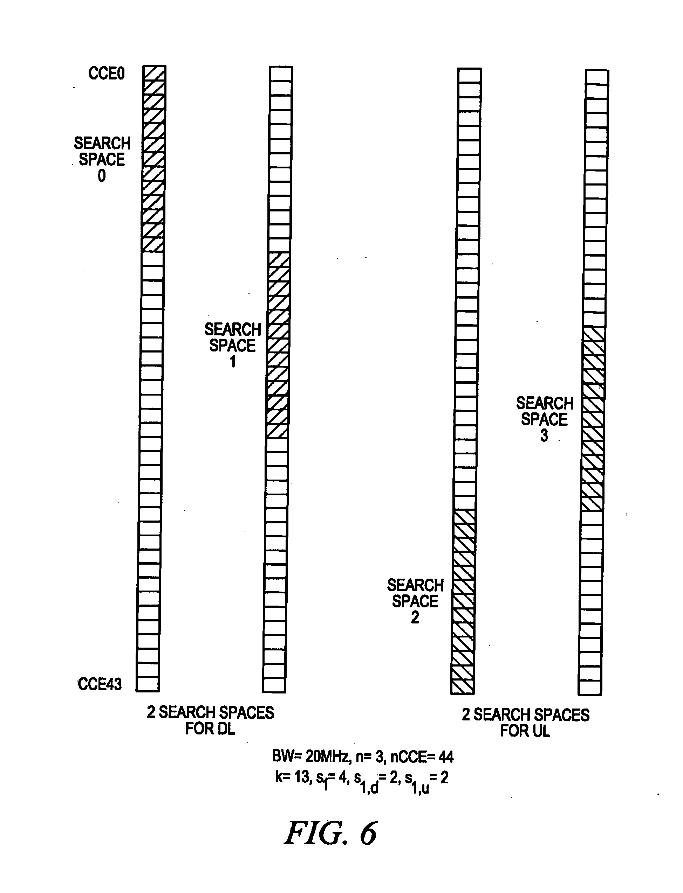

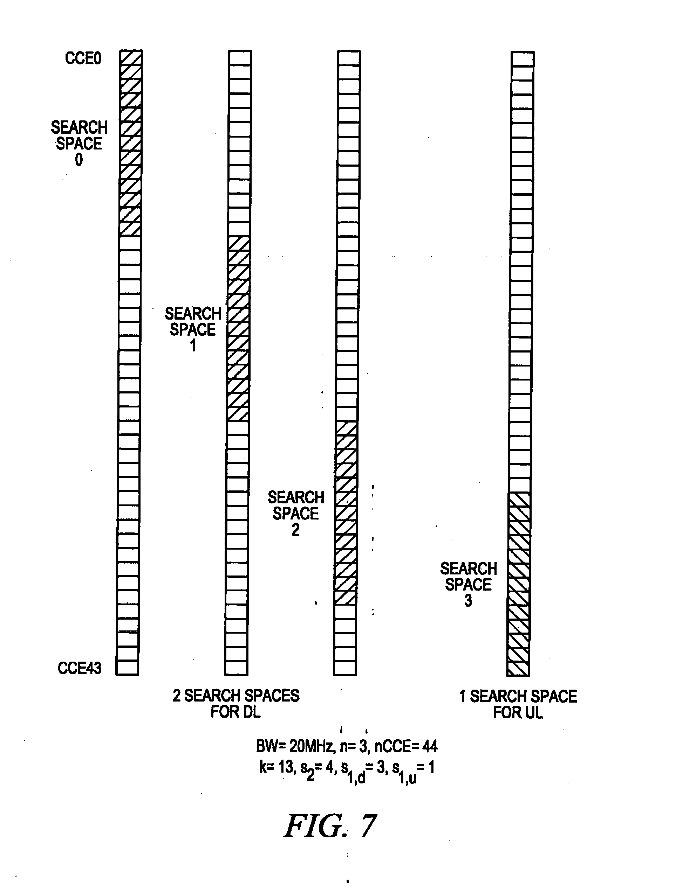

FIGs. 5, 6 and 7 illustrate search space allocations.
FIG. 8 illustrates operation of a remote unit.
FIG. 9 illustrates operation of a base unit.
Table 1 illustrates a control channel configuration.
Table 2 illustrates a search space table.
Table 3 illustrates an alternate search space table.
Table 4 illustrates yet another alternate search space table for K=8.

### Detailed Description Of The Drawings

In advanced systems, such as the system being proposed for 3GPP LTE, sub-frames include a number of fixed size control channel elements (CCEs), each consisting of a certain number of resource elements (for example 36 resource elements). Note the transmitted signal in each slot is described by a resource grid of Nrb x Nsc subcarriers (Nrb is number of resource blocks in a subframe and depends on the carrier bandwidth (e.g. 25 for 5 MHz LTE carrier) and Nsc is number of subcarriers in a resource block (e.g. 12). Each element in the resource grid for a given antenna port p is called a resource element and is uniquely identified by the index pair (d,b) in a slot (for example, there are two 0.5ms slots in a subframe) where d and b are the indices in the frequency and time domains, respectively. Each resource element d,b on antenna port *p* corresponds to a complex-valued modulation symbol. Modulation symbols corresponding to resource elements not used for transmission of a physical channel or a physical signal in a slot shall be set to zero. A layer 1/layer 2 (L1/L2) control channel (either an uplink or a downlink grant) is composed of 1, 2, 3, 4, or 8 CCEs. Depending upon the number of CCEs (n_{CCEs}) supported in the control region of a sub-frame, some number of control channel (CCH) candidate sets are formed. For example, for a set with n_{CCE} = 13 (i.e., 13 control channel elements in a subframe), there are 27 CCH possibilities, (i.e., the CCH candidate set has size *N_{CCII}* =27) as *N_{CCH}* ≈ 2×nCCE. (Note that Ncch is also referred to as nCCE which is the total number of CCEs supported in the control region of a subframe.)

When the UE checks the CCH candidate set to obtain the control information, if present, it has no knowledge which control channel in the CCH candidate set is used. Thus the UE performs blind detection (BD) on all the control channel elements. The flexibility provided by such blind detection has the advantage of reducing the overall amount of channel resources needed for L1/L2 control by allowing each grant size to adapt to the necessary number of resources for the grant to be reliably received, rather than always using the worst case grant size (8 CCEs). For example, for very good channel quality, a single CCE might be used with high confidence that the UE will reliably receive the control signal, whereas for very poor signal quality, such as where the user equipment is near the edge of a cell, a large number of CCEs might be used. Thus, blind detect allows the base station to dynamically select the control channel size such that a large number of CCEs need not be used all of the time. However, blind detection requires much higher complexity in the user equipment. When performing blind detection, the UE attempts to detect the control message assuming CCH-i is used, i=0, 1, ..., *N_{CCH}*-1. Although the UE might stop if a valid control message is obtained (e.g., CRC passes), the maximum number of blind detections the UE needs to perform for a given control message format is *N_{CCH}*. Since the format for uplink and downlink scheduling grants sent on L1/L2 control channels (DPCCHs) is different, a UE needs to perform approximately a total of 2× *N_{CCH}* =4×nCCE blind detections to accommodate both the DL and UL.

Where the E-UTRA carrier bandwidth is 5MHz and 3 OFDM symbols ('n'=3) are used for the control region, there may be 18 CCEs resulting in over 54 blind detection attempts for both DL and UL. For a 20MHz carrier frequency with 3 OFDM symbols used for the control channel, there can be 44 CCEs, which means over 176 blind detection attempts to accommodate the DL and UL control channels.

The inventors have found that the number of blind detections should be limited to less than 50, and most preferably less than 40, to improve UE performance. A large number of blind detections is not desirable because:
- it produces excessive hardware complexity to complete all the blind detections for the OFDM symbols;
- it elevates the false detection probability given a CRC size limit (for example a size limit of 16-bits); and
- it negatively impacts power consumption in the UE.
In particular, it should be noted that it desirable for the UE to look for a control channel, then go to "micro" sleep until the start of the next sub-frame. In this case, most of the UE processing involves L1/L2 control channel decoding, and limiting blind detections can produce a significant improvement in power management performance.

To improve device performance the number of CCH candidates is limited thereby decreasing the average number of blind decoding attempts required to reliably detect a control channel intended for the device. According to one aspect of the invention, the number of candidates is limited by mapping a user equipment device identifier to at least one search space for control channel elements. According to another aspect of the invention, the search space for a particular user equipment is identified at least in part from a control signal.

As required, detailed embodiments are disclosed herein; however, it is to be understood that the disclosed embodiments are merely exemplary of the invention as defined by the appended claims. Therefore, specific structural and functional details disclosed herein are not to be interpreted as limiting, but merely as a basis for the claims and as a representative basis for teaching one skilled in the art to variously employ the present invention. Further, the terms and phrases used herein are not intended to be limiting; but rather, to provide an understandable description of the invention.

The terms a or an, as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically. The terms program, software application, and the like as used herein, are defined as a sequence of instructions designed for execution on a computer system. A program, computer program, or software application may include a subroutine, a function, a procedure, an object method, an object implementation, an executable application, an applet, a servlet, a source code, an object code, a shared library/dynamic load library and/or other sequence of instructions designed for execution on a computer system.

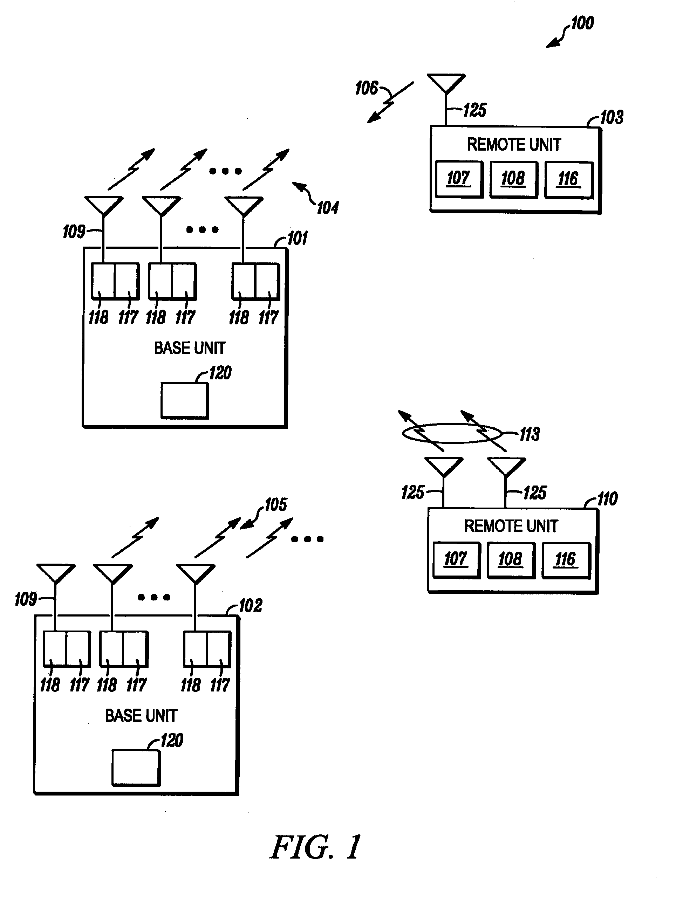

With reference now to FIG. 1, a wireless communication system 100 comprising multiple cell serving base units forming a network distributed over a geographical region. A base unit may also be referred to as an access point, access terminal, Node-B, or similar terminologies known in the art. The one or more base units 101 and 102 serve a number of remote units 103 and 110 within a serving area or cell or within a sector thereof. The remote units may also be referred to as subscriber units, mobile units, users, terminals, subscriber stations, user equipment (UE), user terminals or by other terminology known in the art. The network base units communicate with remote units to perform functions such as scheduling the terminals to receive or transmit data using available radio resources. The wireless network also comprises management functionality including data routing, admission control, subscriber billing, terminal authentication etc., which may be controlled by other network entities, as is known generally by those having ordinary skill in the art.

Base units 101 and 102 transmit downlink communication signals 104 and 105 to served remote units on at least a portion of the same resources (time and/or frequency divided). Remote units 103 and 110 communicate with one or more base units 101 and 102 via uplink communication signals 106 and 113. The one or more base units may comprise one or more transmitters 117 and one or more receivers 118 that serve the remote units. The number of transmitters 117 at the base unit may be related, for example, to the number of transmit antennas 109 at the base unit. When multiple antennas are used to serve each sector to provide various advanced communication modes, for example, adaptive beam-forming, transmit diversity, transmit SDMA, and multiple stream transmission, etc., multiple base units can be deployed. These base units within a sector may be highly integrated and may share various hardware and software components. For example, all base units co-located together to serve a cell can constitute what is traditionally known as a base station. The remote units may also comprise one or more transmitters 107 and one or more receivers 108. The number of transmitters may be related, for example, to the number of transmit antennas 125 at the remote unit. For example, the remote units may have 1, 2, 3, 4 or more antennas. The remote units 103, 110 operate under that control of a controller 116. Controller 116 controls the operation of the remote unit, including processing user inputs, transmission and reception of signals, scheduling, encoding, formatting, etc.

In one embodiment, the communication system utilizes OFDMA or a next generation single-carrier based FDMA architecture for uplink transmissions, such as interleaved FDMA (IFDMA), Localized FDMA (LFDMA), DFT-spread OFDM (DFT-SOFDM) with IFDMA or LFDMA. In other embodiments, the architecture may also include the use of spreading techniques such as direct-sequence CDMA (DS-CDMA), multi-carrier CDMA (MC-CDMA), multi-carrier direct sequence CDMA (MC-DS-CDMA), Orthogonal Frequency and Code Division Multiplexing (OFCDM) with one or two dimensional spreading, or simpler time and frequency division multiplexing/multiple access techniques.

Generally, a wireless communication network infrastructure scheduling entity located, for example, at each base unit 101 and 102 in FIG. 1, allocates or assigns radio resources to remote units in the network. The base units each include a scheduler 120 for scheduling and allocating resources to remote units in corresponding serving areas or cells or sectors. In multiple access schemes such as those based on OFDM methods and the long term evolution of UTRA/UTRAN Study Item in 3GPP (also known as evolved UTRA/UTRAN (EUTRA/EUTRAN)) or 3GPP LTE, scheduling may be performed in the time and frequency dimensions using a Frequency Selective (FS) scheduler. In some embodiments, each remote unit may provide a frequency band channel quality indicator (CQI) or other metric to the scheduler to enable scheduling.

In OFDM systems or OFDM like systems such as DFT-SOFDM and IFDMA, a resource allocation is a frequency and time allocation that maps information for a particular base unit to sub-carrier resources from a set of available sub-carriers as determined by the scheduler. This allocation may depend, for example, on the frequency-selective channel-quality indication (CQI) or some other metric reported by the remote unit to the scheduler. The channel-coding rate and the modulation scheme, which may be different for different portions of the sub-carrier resources, are also determined by the scheduler and may also depend on the reported CQI or other metric. In code division multiplexed networks, the resource allocation is code allocation that maps information for a particular base unit to sub-carrier resources from a set of available sub-carriers as determined by the scheduler.

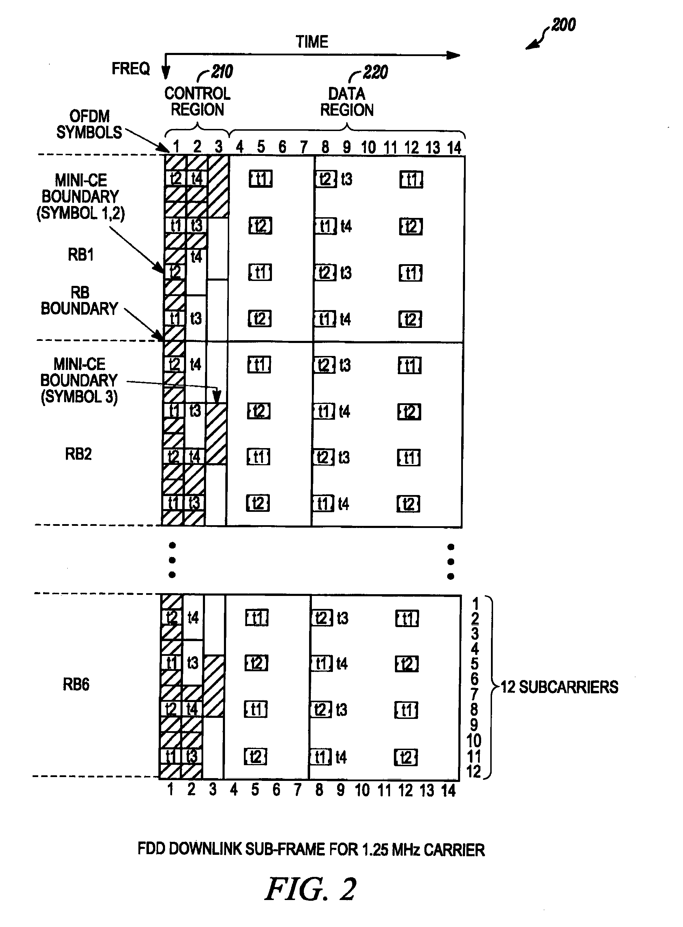

FIG. 2 illustrates a sub-frame 200 that constitutes a portion of a radio frame. The radio frame generally comprises a plurality of sub-frames, which may form a concatenated continuum of sub-frames. Each frame corresponds to a transmission time interval (TTI). An exemplary TTI is 1 ms. If a single TTI has a length 1 ms, the TTI can be segmented into two sub-frames each having a 0.5 ms length. Such a construction however implies the need to address multiple resource blocks, i.e., more than the number of resource blocks in a single 0.5 ms sub-frame, unless the resource block (RB) definition is expanded to automatically define the RB as extending over the entire length of the TTI, without regard for the TTI duration. This can lead to inefficiency, however, in the form of excessive per-RB capacity. In case the RB is defined to extend over a fraction of the length of the TTI, it would be possible to independently address each of the resource blocks in the multiple sub-frames making up the TTI. Accordingly mechanisms are required to signal resource assignments in the case of a frame or TTI composed of concatenated sub-frames. Furthermore, mechanisms are required to be able to assign resources based on the needs of individual UE wherein fewer resources being assigned for a UE served smaller packets while more resources assigned to UE served with larger packets. In the case of UMTS (Universal Mobile Telecommunications System), a TTI is defined as the length of time over which a transmission or transport block is transmitted. A transmission block or transport block is composed of a block of jointly coded data protected by a single CRC. In the present instance, an alternate definition of TTI could be the length of transmission controlled by a single instance of control channel signaling.

As illustrated in FIG. 2, a sub-frame includes frequency sub-bands (vertical axis) and time slots (horizontal axis), the number of sub-bands being dependent upon the bandwidth of the channel. For example, in 3GPP LTE, a communication link between a remote unit and a base unit may have a carrier bandwidth of 1.25 MHz, 2.5 MHz, 5 MHz, 10 MHz, or 20 MHz, each frequency bandwidth having a larger number of sub-bands in proportion its size. The frame may include, for example 14 time slots, and of those slots, 1, 2 or 3 slots may be allocated to the control region 210, or control channel portion, of the frame and the remaining 11, 12 or 13 slots being available for the data region 220 for scheduled data. The exemplary sub-frame is optionally grouped into multiple resource blocks (RB), which in the illustrated example shows 6 resource blocks RB1, RB2, RB3, RB4, RB5, RB6), each comprising a group of 12 contiguous sub-carriers, or sub-bands, which can be employed for a 1.25 MHz carrier bandwidth. Although the above numbers are described for exemplary purposes, the actual numbers used herein are for description purposes, those skilled in the art will recognize that the number of bands, sub-bands, slots, channel control elements, etc., can be different without deviating from the invention. The control region is used to schedule radio resources (RS) for UL and DL data transmission.

Within the frame, the composite control channel portion 210 comprises 1, 2 or 3 time slots depending upon the number of OFDM symbols allocated to control channels. The illustrated sub-frame has 3 OFDM symbols. However, 1 or 2 symbols can be allocated to the control channel. Within the control channel portion, each time slot and sub-band constitutes a control channel element (CCE) such that each CCE comprises a plurality of resource elements.

A control channel is comprised of one or more CCEs. As mentioned above, each CCE is represented by a box and defined by a time slot and sub-band. Thus, within RB6, a CCE for t1 can be found in slot 1 in sub-carrier 5 and slot 1 in sub-carrier 11. If the control channel comprised two CCEs, these two CCEs would together constitute the control channel for t1.

If more than one CCE is aggregated to make a control channel, the CCEs forming the control channel may be contiguous (same time slot adjacent sub-band) or located non-contiguously throughout the control channel portion (different sub-bands, subcarrier, and/or different symbols within the control region 210). FIG. 2 illustrates the composite control channel includes a plurality of control channel elements. The control channel elements each comprise a codeword that provides a physical mapping of a logical control channel to a sequence of symbols, for example, QAM symbols. The control channel elements are generally not the same type. In FIG. 2, for example, control channel elements 212 and 218 have different sizes. In a preferred embodiment the control channel elements are of the same size for a given carrier bandwidth. Control channel elements may also be for uplink or downlink assignments, and have different associated information payload. A particular user equipment thus must locate the control channel elements for the particular user equipment and aggregate them to identify for an uplink and downlink the particular location in time and frequency at which its data is scheduled. Control channel elements may also be associated with different releases of the specification. In some embodiments, the composite control channel includes reference symbols, for example, pilot symbols, that are distinct from the control channel elements. The reference symbols are typically read by all remote units.

In one embodiment, each control channel element contains only radio resource assignment information, for example, a codeword, exclusively addressed to a single wireless communication entity, for example, one of the remote units 103, 110 in FIG. 1. The radio resource assignment information includes, among other remote unit specific information, a time-frequency radio resource assignment. In other embodiments, the radio resource assignment information may additionally comprise modulation, code rate, information block size, antenna mode indicator, and other information.

In one embodiment, the wireless communication network infrastructure entity, for example, the scheduler 120 may address more than one control channel element to the same wireless communication entity, for example, one of the remote units 103 or 110 in FIG. 1. More particularly, the control channel may include a first version of a codeword including a resource assignment on a first control channel element of the composite control channel and a second version of the codeword including a resource assignment on a second control channel element of the composite control channel, wherein both of the first and second versions of the codeword are addressed to the same user equipment unit. In one embodiment, the first and second versions of the codeword are the same, and in another embodiment the first and second versions of the codeword are different. Whether codes words addressed to the same entity are different or the same affects how the addressed entity combines the control channel elements as discussed further below. Thus the wireless communication network infrastructure entity transmits the composite control channel including at least two control channel elements, wherein each elements includes corresponding first and second codeword versions addressed to the same entity. In some instances, the wireless network infrastructure entity may, typically based on the channel conditions of the entity, transmit the composite control channel including a single control channel element addressed to the entity. Additionally, as mention above, the control channel may comprise 8 CCEs located throughout the control region.

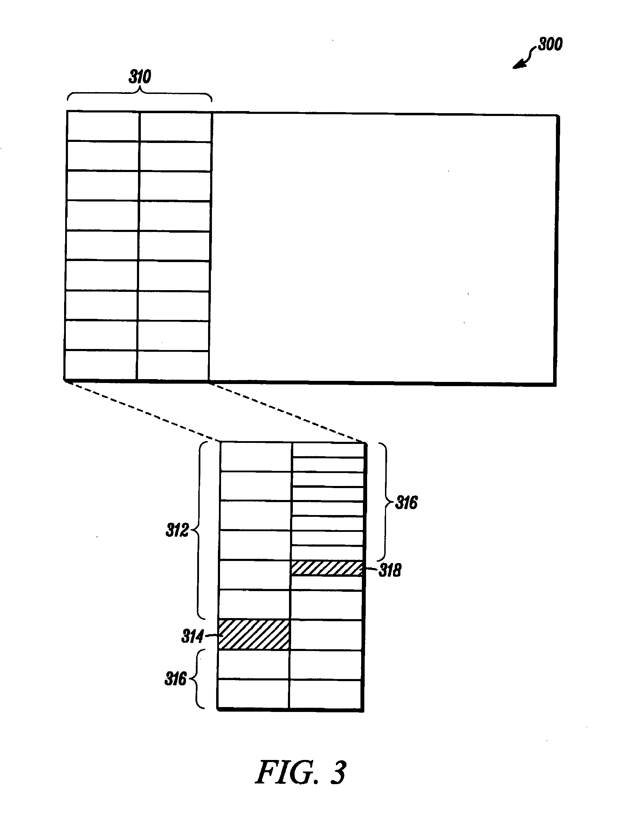

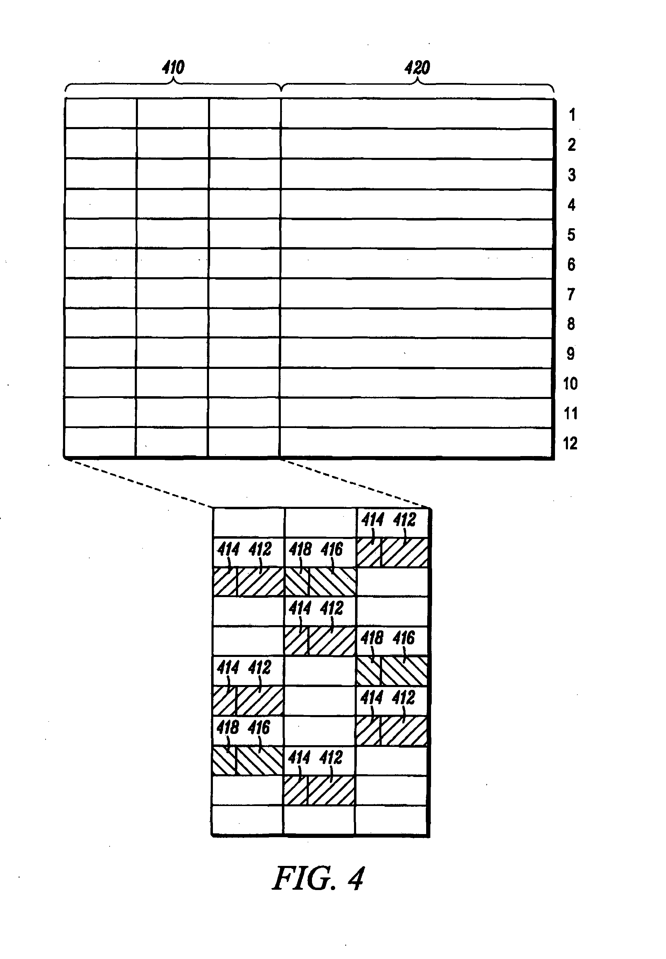

In embodiments where the composite control channel includes a composite control channel including at least two different types of radio resource assignment control channel elements, the remote unit generally determines the number of types of control channel elements constituting the composite control channel upon receiving the composite control channel. In one embodiment, the composite control channel includes type indicator information for each type of control channel element constituting the composite control channel. The remote unit may thus determine the number of types of control channel elements based on the type indicator information. In FIG. 3, a radio frame 300 includes a composite control channel 310 comprising a first control channel element type 312 and a second control channel element type 316. The first control channel element type 312 is identified by a first indicator, for example, a sequence of bits, 314 appended to a last control channel element of the first type. The second control channel element type 316 is identified by a second indicator 318 appended to a last control channel element of the second type. In another embodiment illustrated in FIG. 4, the indicators 314 and 318 are not present, and the control channel element type is determined after successful decoding of the control element. For example, the CCE 412 of a control channel for remote unit 103 can include one or more type bits 414 that may indicate an uplink or downlink control element in the decoded payload and identify the remote unit, and the CCEs 416 for the remote unit 110 may include one or more control bits 418 that indicate the uplink or downlink control element for the remote unit 110. The control element may be addressed to a single UE by a color coded CRC or by other means. According to another aspect, the remote unit determines a number of control channel elements constituting the composite control channel from a transmitted control signal. FIGs. 3 and 4 are only one illustrative embodiment of the physical layout of the control channel elements on the radio-sub frame. In an alternate embodiment, the layout may be viewed as a logical layout, where the control channel elements comprise a number of sub-carriers distributed pseudo-randomly across the control region, but restricted to a control channel set associated with the mobile identifier.

In one embodiment, the determining of the number of control channel elements constituting the composite control channel includes determining a number of uplink control channel elements and determining a number of downlink control channel elements. The number of uplink and down link control channel elements are determined based one or more factors such as where the first and second bit sequences are embedded within the frame, the channel quality for communications with the mobile, the carrier frequency for the communication link, and the number of control symbols in a frame. The number of uplink control channel elements may be determined based on a first sequence of bits and the number of downlink control channel elements may be determined based on a second sequence of bits embedded within the frame. Alternatively, the use of different bit sequences may indicate the different number of control channel elements. For example, a first bit sequence may indicate a first number of uplink elements and a second bit sequence may indicate a second number of uplink elements.

In some embodiments, the composite control channel includes a first composite control channel portion in a first receive bandwidth on first center frequency and a second composite control channel in a second receive bandwidth on a second center frequency. Such a control channel structure may be implemented to accommodate remote users having limited receive bandwidth. More generally, the composite control channel may be divided into multiple composite control channel portions on corresponding center frequencies. For example, terminals may have their receiver bandwidths limited to 10 MHz, while the carrier bandwidth is 20 MHz. In order accommodate such terminals of limited minimum bandwidth capability, it might be necessary to map the composite control channel to both the lower 10 Mhz and the upper 10 MHz sub-bands of the 20 MHz carrier. Terminals with 10 MHz capability camp on either one of the upper or lower sub-bands and receive the respective composite control channel.

The present invention permits a reduction in the number of blind detections without increasing the signaling overhead. A number of methods are disclosed which can be advantageously implemented alone, but are most preferably implemented in combination.

According to a first aspect, the number of blind detections can be reduced by limiting control channel elements to CCH candidate sets that are different for the downlink and uplink scheduling grants sent on the L1/L2 control channels. For example, where a control region has 18 CCEs, allocating all of them for the uplink and downlink scheduling grants would require that the mobile perform 72 blind detection attempts. By allocating separate non-overlapping, or partially overlapping, control channel element candidate sets for the uplink and downlink, the number of blind detections can be reduced. For example, if 10 CCEs are assigned to the downlink control channel set and 8 CCEs are assigned to the uplink candidate set, then the number of blind detection attempts for the uplink is 20 and the downlink is 16, for a total of 36 blind detections. This results in a reduction by 50% of the total number of blind detection attempts for the reduced search space for UL and DL with a combined 18 CCEs. It is envisioned that each of the uplink and downlink candidate sets may contain the same number of assigned CCEs to form candidate control channels, or more can be allocated to one of the uplink and downlink than the other. For 5 MHz it has been found that only about 6 to 8 channels need to be scheduled per sub-frame on the downlink or uplink to achieve full spectral efficiency for full buffer and web browsing traffic. Hence, only about 8 CCEs are needed for the downlink and 8 CCEs for the uplink search space to guarantee that 8 remote devices can be scheduled to receive downlink transmissions and 8 remote devices can be scheduled for uplink transmissions. It is envisioned that more than 8 CCEs can be used to improve CCH coverage in the 5 MHz case.

More particularly, in one exemplary embodiment, it is envisioned that for a 5MHz 3GPP LTE Carrier, where n=3 OFDM symbols, the number of control channel elements in the control region is 18 (nCCE = 18), a single search space can comprise 18 CCEs resulting in 2 x 36 blind detections for each of the uplink and downlink, resulting in a total of 72 blind detections if the uplink and downlink control channel elements are not distinct. However, for two search spaces, n=3 OFDM symbols, nCCE= 18, the downlink having 10 CCEs will result in 20 blind detections and the uplink having 8 CCEs will require 16 blind detection attempts for a total of 36 blind detection attempts. This permits fewer blind detection attempts per sub-frame to cover both search spaces (i.e., the uplink and downlink), and it is further envisioned that it is desirable to allocate no more than 13 CCEs for either UL or DL since the total blind detection attempts for uplink and downlink scheduling grants would be approximately 2x27=54

According to another method, a UE can determine the number of control channel candidates for UL and DL transmissions without increasing associated signaling to support this determination using the number of control symbols. The CCEs available for a given control channel candidate set is thus a function of the number of OFDM symbols assigned to the control region. For example, the remote unit and the base unit will know the size of the control channel candidate set from the number of control symbols (1, 2 or 3) in the control region. For one symbol, the remote unit and the base unit can use a smaller set of CCE candidates for the CCH than for 2 OFDM symbols, which will be smaller than the number of CCE candidates for 3 OFDM symbols. It is envisioned that the remote unit can ascertain the number of OFDM symbols in the control region by looking at a control signal indicating this, such as the Physical Control Format Indicator Channel (PCFICH).

According to another method, the number of antennas deployed by the base unit may impact the number of CCEs. This is because the downlink reference symbol (RS) format changes based on the number of base unit antennas employed, such that more of the resource elements (subcarriers) that could have been used to create CCEs are used instead for reference symbols.

In addition to needing knowledge of the downlink RS format, both the size of the downlink ACK/NACK (A/N) resources and the size of the cat0 resources (where cat0 is information (e.g., CCFI) transmitted on the PCFICH) are needed to establish how many resources (resource elements) in the control region are available for forming control channel elements. Table 1 highlights this relationship and shows the resources allocated in the first OFDM symbol of the control region to downlink ACK/NACK (A/N), cat0, and unassigned resources due to granularity of a control channel element, where in Table 1 a control channel elements (CCEs) is composed of 9 mini-CEs, where mini-CEs are composed of 4 control resource elements (REs). Hence, a CCE is composed of 36 REs. In OFDM symbols 1 (ofdm1) and 2 (ofdm2) there are reference symbols occupying some of the REs that could have been used for CCEs. In Table 1 there are 4 antennas with RSs taking up 1/3 of the REs in ofdm1 and 1/3 of the REs in ofdm2. In ofdm3 there are no RSs such all of the REs can be assigned to control to form CCEs. Since n=3 the available resources from all 3 ofdm symbols in the control region can be used to form CCEs. If n=2 then only the resources from the first two OFDM symbols (Ofdm1 and ofdm2) could be used to form CCEs. Similary for n=1 only the resources of the first OFDM symbol can be used to form CCEs.

Table 2 shows the number of search spaces for K of 12 (where K_{DL} = K_{UL} =12 for all bandwidths) and for different control channel configurations. In the table k (small k) indicates the actual CCEs for the control channel configuration which can be less than K when #CCEs < K (i.e. k=MIN(K,#CCEs) where #CCEs is given in the table for different carrier bandwidths (5, 10, and 20 MHz). Although it is not necessary to indicate a separate K_{DL} and K_{UL} for each bandwidth mode the benefit is that fewer blind detections are performed which reduces CRC falsing and reduced mobile station complexity. Table 2 shows the number of search spaces for K= 12 (where K_{DL} = K_{UL} =12 for all bandwidths) and for different control channel configurations.

According to another embodiment, the carrier frequency can be used to determine the number of CCEs in the control channel and the size of the control channel candidate set. The larger the carrier frequency, the larger the number of CCEs. Thus, the number of CCEs for 5 MHz will be less than the number of CCEs for 10 MHZ, and the number of CCEs for 20 MHz will be larger than for 10 MHz. Table 2 shows the number of search spaces for K= 12 (where K_{DL} = K_{UL} =12 for all bandwidths) and for different control channel configurations. Although it is not necessary to indicate a separate K_{DL} and K_{UL} for each bandwidth mode the benefit is that fewer blind detections are performed which reduces CRC falsing.

These methods can be combined according to a most preferred embodiment, as exemplified in Tables 2 and 3 described as follows. Table 2 shows the number of search spaces for K = 12 (where K_{DL} = K_{UL} =12 for all bandwidths) and for different control channel configurations. Although it is not necessary to indicate a separate K_{DL} and K_{UL} for each bandwidth mode the benefit is that fewer blind detections are performed which reduces CRC falsing. For smaller K the number of search areas increases (see Table 3) resulting in some CCH performance loss due to reduced trunking efficiency. However, the number of blind detections is reduced which in turn reduces CRC falsing.

In another example the number of search spaces (S) for different total numbers of CCEs (#CCEs = nCCE) is determined by control region of size (n being the number of OFDM symbols in the control region), carrier bandwidth, control channel configurations (which accounts for different number of base station transmit antennas and reference symbol formats used), and the PCFICH state (i.e. the CCFI value) and for K=max(K_{DL}, K_{UL}) and where K_{DL} =8 and K_{UL} <= K_{DL} (e.g. K_{UL} =6). Making K_{DL} > K_{UL} helps keep control channel (e.g. PDCCH in E-UTRA) coverage with a downlink format the same as a control channel with an uplink format since an uplink format regarding scheduling grants has fewer payload bits than a downlink format regarding scheduling grants. With K=8 then the number of blind detections is less than 40 which is considered good for reduced mobile station complexity and reduced CRC falsing. The PCFICH state '10' and '11' are used to determine how many uplink S_{UL} and downlink S_{DL} search spaces there in the *n*=3 case, given S= S_{DL} +S_{UL} and where S=ceiling (nCCE/K). The number of CCEs available for control channel candidates in a downlink search spaces (that is search spaces with a predominantly downlink format corresponding to a downlink scheduling grant) is K_{DL} and the number of CCEs available for control channel candidates in an uplink search space (that is search spaces with a predominantly uplink format (corresponding to an uplink scheduling grant) is K_{UL}. A hashing function based on a unique identifier assigned to each mobile station by the base station or network is used to determine which of the downlink and which of the uplink search spaces a mobile station should be assigned to. Note S and s have the same definition. In PCFICH state = 00 there are a total of 4 CCEs available in the control region for the 5 MHz carrier given n=1 and control channel configuration=1. Since #CCEs < K (i.e. #CCEs=4 < K=8) then there is only a single search space used both for the downlink search space and uplink search space. In this case the downlink and uplink search spaces have 100% overlap. In the 20 MHz case in row 1, #CCEs =10 and since #CCEs=10 is greater than K=8 then there are 2 search spaces, one being a downlink search space of size K_{DL} and one being an uplink search space of size K_{UL}. There is significant overlap for the uplink and downlink search spaces. In PCFICH state = 10 there are a total of 27 CCEs available in the control region for the 10 MHz carrier. In this case the number of downlink search spaces (S_{DL}) is given as 2 and the number of uplink search spaces (S_{UL}) is given as 2. But for PCFICH state = 11, for the 10 MHz carrier case, S_{DL} =3 and S_{UL} =1 with the same number of total CCEs=27 (nCCE=27) available in the control region for a 10 MHz carrier. Hence, the PCFICH state can be used to indicate to the mobile stations how many uplink and downlink search spaces there are in a subframe for *n=3.*

In Table 2, four control channel configurations are illustrated. The configuration has control channel sizes of 1, 2 or 3 OFDM symbols (time slots). The number of CCEs at 5 MHz, 10 MHz and 20 MHz will vary depending on the size of the CCH. Thus, for control channel configuration 1: at 5Mhz, there are 4 possible CCEs, the number of CCEs is limited to 4, and there is a single search set; for 10 MHz there are 6 possible CCEs, the number of CCEs available for the control channel is 6 and there is 1 search set; and for a 20 MHz carrier, there are 10 available CCEs, the number of CCEs in a search set is 10, and the number of search sets is 1. For control channel configuration 2, the carrier channel is larger such that there are 2 symbols: at 5Mhz, there are 9 possible CCEs, the number of CCEs is limited to 9, and there is a single search set; for 10 MHz there are 14 possible CCEs, the number of CCEs available for the control channel is limited to 12, and there are 2 search sets; and for a 20 MHz carrier, there are 24 available CCEs, the number of CCEs in a search set is limited to 12, and the number of search sets is 2. For control channel configuration 3, having 2 symbols: at 5Mhz, there are 12 possible CCEs, the number of CCEs is limited to 12, and there is a single search set; for 10 MHz there are 19 possible CCEs, the number of CCEs available for the control channel is limited to 12, and there are 2 search sets; and for a 20 MHz carrier, there are 30 available CCEs, the number of CCEs in a search set is limited to 12, and the number of search sets is 3. For control channel configuration 4, having 3 symbols: at 5Mhz, there are 18 possible CCEs, the number of CCEs is limited to 12, and there is are 2 search sets; for a 10 MHz there are 27 possible CCEs, the number of CCEs available for the control channel is limited to 12, and there are 3 search sets; and for a 20 MHz carrier, there are 44 available CCEs, the number of CCEs in a search set is limited to 12, and the number of search sets is 4. It is envisioned that the search sets will overlap. These sizes are stored in the base unit and the remote unit, so that each knows based upon the CCH configuration, size and bandwidth, how big the search set is.

For a MBMS sub-frame n=1 or 2 (one or two OFDM symbols for the control region) is sufficient since no downlink scheduling grants need be supported (only ACK/NACKs, CCFI, and uplink scheduling grants). In that case as long as the size of the uplink search space encompasses the entire control region (all CCEs), then there is no significant problem if the remote unit treats the control region also as downlink and searches it for downlink as well. There may be false detections resulting in potential soft buffer corruption, however, the soft buffer will be flushed when an actual scheduling grant is detected on a subsequent subframe for a scheduled packet, such that false detections have no impact on performance. This requires that a new data indicator bit be supported explicitly or implicitly by uplink and downlink scheduling grants. It will be recognized that if the UE knows which sub-frames are MBMS, then UE controller 116 can by default not check for downlink CCH candidates at all. For 10 and 20 MHz, n=1 will typically be sufficient. If n=2 is used then there may be some CCEs that go unused, given K * s < nCCEs or if some of the search spaces are indicated as downlink. Thus, where the UE knows which subframes are MBMS, then it can assume that all search spaces are for uplink.

The location of the search set can be determined from control signaling from the base units 101, 102 to the remote units 103, 110. Alternatively, it is envisioned that the search sets can be predefined and stored in the base unit and remote units. Thus, the control region 210 is divided into multiple sets of CCE candidates, or search spaces. In the case of where the number of CCEs available in a frame is equal to the search set size, the entire control region is searched. In the above example of Table 2, this would be the case where CCH configuration 1 at all carrier frequencies, and configurations 2 and 3 with a 5 MHz carrier. For configurations 2 and 3 at 10 MHz, and configuration 3 with a 5 MHz carrier, 2 overlapping search spaces of 12 predetermined CCEs are used for each of the uplink and downlink search sets. For configuration 2 at 20 MHz, the uplink and downlink CCEs can be two non-overlapping or overlapping search spaces comprising 12 predetermined CCE candidates. For configurations 3 at 20 MHz, the uplink and downlink CCEs can be 3 overlapping search spaces comprising 12 predetermined CCE candidates. For configuration 4 at 10 MHz, 3 search spaces can be used each comprising 12 predetermined CCEs for each of the UL and DL. For configuration 4 at 20 MHz, the uplink and downlink CCEs can have 4 overlapping search spaces comprising 12 predetermined CCE candidates. An alternative to Table 2 is shown in Table 3, wherein the search spaces for each set are limited to 10, rather than 12, predetermined CCEs. For brevity, the Table 3 will not be described herein as the tables are similar other than the values. Search spaces are illustrated in FIGs. 2, 3 and 4, wherein CCEs associated with each search space are represented graphically.

To avoid adding signaling overhead, it is preferred that the base unit and remote unit are capable of determining which search space is allocated to a remote unit. The base units 101, 102 will know which control channel elements can be used to for mobile 103 and which can be used for mobile 110. It is envisioned that a unique mobile identifier, known to both the remote unit and the base unit can be advantageously employed for this purpose. In particular, it is envisioned that a remote units electronic serial number (ESN), international mobile identifier (IMSI), or a mobile identifier issued by the base unit, such as the cell specific radio network temporary identifier (C-RNTI) can be employed. Where the control signal is intended for a group of mobiles, a mobile group identifier can be used such as the random access RNTI_(RA-RNTI) or paging RNTI_(P-RNTI). Given the known identifier, the remote unit and base unit each use this number to determine the set of CCE candidates to use. This can be accomplished using a hash function or using the last digit of the unique identifier. This for example, where there are 2 sets, an odd last digit of the identifier can be used to indicate a first one of the sets and an even last digit could be used to indicate the second of the sets is used. Where more than 2 sets are used, a modulo function can be employed. By using the predetermined relationship of the mobile identifier and the search sets, and storing the locations of the predetermined CCEs associated with each search set identified by the CCH size and the bandwidth, the remote unit and the base unit can independently ascertain the appropriate search set for the CCEs. In another embodiment, the hashing function includes a means for hopping the remote unit to different control channel candidate search spaces on a subframe basis using at least one of a unique identity associated with the remote unit, system frame number, or a subframe index in radio frame.

Some considerations of tables 2 and 3 follow. If the number of available CCEs is less than k (i.e., nCCE<=k, (where k=13 for example)) then only one search space is used for uplink and downlink scheduling grants. If the k<nCCE<=2k, then two possibly overlapping search spaces of size k are employed, one for the downlink (DL), one for uplink (UL). The overlap can be minimized by making search space 0 be the first k CCEs, and search space 1 the last CCEs. Specifically, search space 0 is CCH candidate set {CCE₀, CCE₁, ..., CCEₖ₋₁ }, and search space 1 is CCH candidate set { CCE_{nCCE-k}, CCE_{nCCE-k-2}, ..., CCE_{nCCE-1}}. The amount of overlap is equal to nCCE-2x(nCCE-k)=2k-nCCE. DL and UL search spaces do not overlap if nCCE=2k. Maximum overlap of k-1 occurs if nCCE=k+1. The search spaces can be assigned to DL/UL with either (search space 0->DL, search space 1->UL) or (search space 1->DL, search space 0->UL). For example. If there were 18 CCEs then the first k=13 CCEs are allocated to the DL search space and the last k=13 CCEs are allocated to the UL search space. Due to overlap, 2×13-18=8 CEs are common to both the DL and UL search spaces. In the case the nCCEs exceeds 2k, i.e., nCCE>2k, (26 if k=13) then the CCFI will indicate whether there are *s*₁ or *s*₂ search spaces. For the *s*₁ (or *s*₂) search spaces, s_{1,d} (s_{2,d}) search spaces are for DL, and *s*_{1,u} (s_{2,u}) search spaces are for UL, where *s*₁=s_{1,d}+s_{1,u}, *s*₂=s_{2,d}+s_{2,u}. For example, *s*₁=3 (s_{1,d}=2, *s*_{1,u}=1) or *s*₂=4 (*s*_{2,d} =2, *s*_{2,u} =2) search spaces, where each search space corresponds to a CCH candidate set of size k CCEs. Note that (*s*_{1,d}, *s*_{1,u}), (*s*_{2,d}, *s*_{2,u}) can be static or semi-static if signalled via BCH or dynamic if implicitly signaled via the cat0 (also called the control channel format indicator (CCFI)). Another assumption is PICH/AICH are always in the first search space which is DL only or both DL and UL (if nCCEs <= k).

The search space definition is more complicated when there are more than two search spaces (nCCE>2k). Assuming each search space is a candidate set composed of k CCEs, then the minimum number of search spaces is sₘᵢₙ=┌nCCE/k┐. More search spaces can be defined overlapping other search spaces. The DL search spaces are defined by sequentially taking CCEs starting from the first CCEs, i.e., {CCE₀, CCE₁, ..., CCEₖ₋₁}, {CCEₖ, CCEₖ₊₁, ..., CCE₂ₖ₋₁}, .... The UL search spaces are defined by sequentially taking CCEs starting from the last CCE, i.e., { CCE_{nCCE-k}, CCE_{nCCE-k-2}, ... , CCE_{nCCE-1}}, { CCE_{nCCE-2k}, CCE_{nCCE-2k-3}, ..., CCE_{nCCE-k-1}}, ... Using BW=10 MHz, n=3 as an example, there may be 27 CCEs, with each CCE composed of 48 REs (R1-072169), i.e., nCCE=27. If each search space is composed of k=13 CCEs, then the minimum number of search spaces is sₘᵢₙ=┌27/13┐=3. Figure 1 illustrates how the search space may be allocated for DL and UL if *s*₁=3 search spaces are used, with s_{1,d}=2, *s*_{1,u}=1. Alternatively, Figure 2 illustrates how the search space may be allocated for DL and UL if *s*₂=4 search spaces are used, with s_{2,d}=2, *s*_{2,u}=2. Note that search space 3 overlaps with search space 0 and 1. For BW=20 MHz, n=3, there are even more CCEs, e.g., 44 CCEs, with each CCE composed of 60 REs (R1-072169). In this case, sₘᵢₙ = ┌44/13┐=4. Figure 3 and Figure 4 illustrates two ways to assign the search spaces.

According to yet another method, two control channel format indicator (CCFI) bits in the control region of each subframe signal the control region size (in terms of number OFDM symbols n, where n=1,2,3) and the number of DL/UL search spaces for each subframe.
For example: if the control channel format indictor bits are '00' the control region has n=1 OFDM symbol.
∘ IfnCCE < k, there is only one search space, which is used for both DL and UL.
∘ If k<nCCE<=2k, there are two search spaces. Search space 0 is CCH candidate set {CCE₀, CCE₁, ..., CCEₖ₋₁ } and is used for DL. Search space 1 is CCH candidate set { CCE_{nCCF-k}, CCE_{nCCE-k-2}, ..., CCE_{nCCE-1}}, and is used for UL.
∘ It is not expected to have nCCE >2k for n=1.
if the control channel format indictor bits are '01' the control region has n=2 OFDM symbols.
∘ If nCCE < k, there is only one search space, which is used for both DL and UL.
∘ If k<nCCE<=2k, there are two search spaces. Search space 0 is CCH candidate set {CCE₀, CCE₁, ..., CCEₖ₋₁ } and is used for DL. Search space 1 is CCH candidate set { CCE_{nCCE-k}, CCE_{nCCE-k-2}, ..., CCE_{nCCE-1}}, and is used for UL.
∘ It is not expected to have nCCE >2k for n=2.
if the control channel format indictor bits are '10' the control region has 3 symbols.
∘ For carrier bandwith 5 MHz or less (BW<=5 MHz):
   ▪ If nCCE < k, there is only one search space, which is used for both DL and UL.
   ▪ If k<nCCE<=2k, there are two search spaces. Search space 0 is CCH candidate set {CCE₀, CCE₁, ..., CCEₖ₋₁ } and is used for DL. Search space 1 is CCH candidate set { CCE_{nCCE-k} CCE_{nCCE-k-2}, ..., CCE_{nCCE-1}}, and is used for UL.
   ▪ It is not expected to have nCCE >2k for n=3 and BW<=5 MHz.
∘ For carrier bandwidth 10 or 20 MHz (BW>5 MHz), there are *s*₁(10) or *s*₁(20) search spaces respectively. Out of *s*₁(10) search spaces, *s*_{i,d}(10) are used for DL and s_{l,u}(10) for UL control channel candidates, where *s*₁(10)= *s*_{1,d}(10)+*s*_{1,u}(10). Similar allocation is defined for *s*₁(20). The number of CCEs in each search space is k.
if the control channel format indictor bits are '11' the control region has 3 symbols.
∘ For carrier bandwith 5 MHz or less (BW<=5 MHz), the search spaces are defined the same as for '10'.
∘ For carrier bandwidth 10 or 20 MHz (BW>5 MHz), there are *s*₂(10) or *s*₂(20) search spaces respectively. Out of *s*₂(10) search spaces, *s*_{2,d}(10) are used for DL and *s*_{2,u}(10) for UL control channel candidates, where *s*₂(10)= *s*_{2,d}(10)+*s*_{2,u}(10). Similar allocation is defined for *s*₂(20). The number of CCEs in each search space is k.

As can be seen from the above description, an aspect of this embodiment is related to the communication of 'cat0', CCFI, or P-CFICH. The CCFI communicates the size of the TDM control region within a subframe; for example, n=1,2, or 3 OFDM symbols. In general, the CCFI will be able to signal 2^#CCFI bits values or states. Therefore, the CCFI can be used for a subset of values used to dimension the TDM control region, to identify more than one search space format. In the above example, there is one n=3 state, with a certain associated search space configuration, and another n=3 state with an alternate configuration. The alternate configuration may include a different definition of the proportion of resources used for UL and DL search spaces. For example, in some instances no search space may be needed for either UL or DL, thus significantly reducing the maximum number of blind detections.

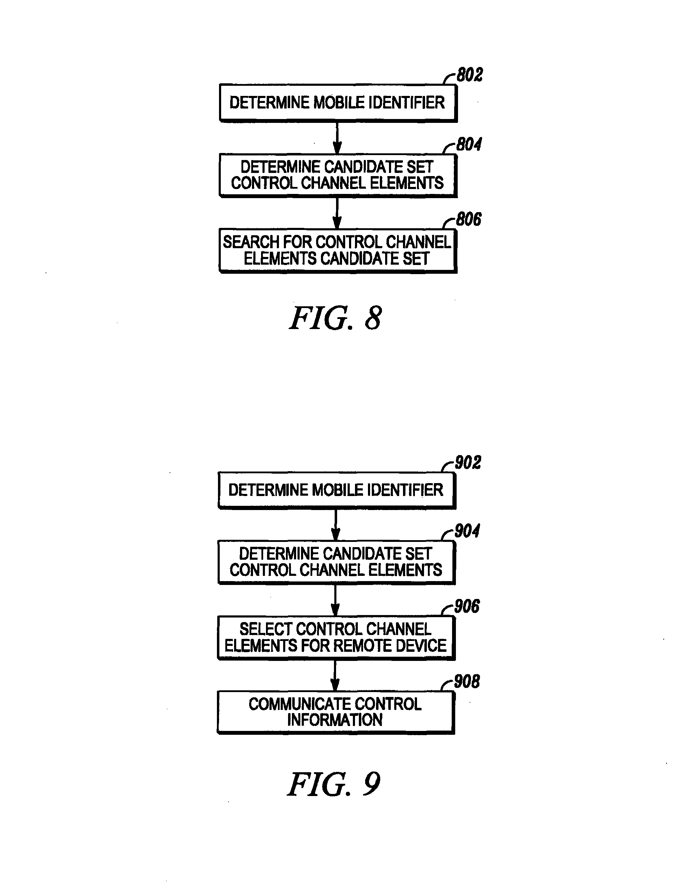

In the process 800 of FIG. 8, a remote unit (or UE) controller 116 determines a unique identifier as indicated in step 802. For example, the remote unit 103, 110, receives a mobile identifier from base unit 102. The remote unit controller 116 determines a candidate set of control channel elements from the mobile identifier at step 804. Alternatively, the remote unit can receive a control signal associated with the candidate set. The remote unit 103, 110 receives a frame including a composite control channel including control channel elements. The control channel elements may contains radio resource assignment information, some of which is exclusively addressed to a single wireless communication entity.

In FIG. 8, the remote unit controller 116 may attempt to decode a single control channel element without first combining elements or it may attempt to decode a single control channel element after decoding or attempting to decode combined elements. Whether or not any combining is necessary depends generally on whether the remote unit is successful decoding single control channel elements. Combining may be required, for example, in instances where a cyclic redundancy check (CRC) or other information verification check fails after decoding a single control channel element, or where decoding is not successful. Information verification typically involves remote unit specific information, which may be included in the decoded control channel element, or masked with the encoded control channel element, or masked or fed into a CRC for CRC color coding.

In some implementations, each of the plurality of control channel elements has an associated root index, which may be used as a basis for combining the control channel elements. For example, if the composite control channel comprises 12 control channel elements, 4 of those elements may have the same associated root index that may be used as the basis for decoding and combining the control channel elements. In embodiments where the control channel is divided into portions on corresponding center frequencies, as discussed above, the remote unit only combines control channel elements from the same control channel portion. In other words, control channel elements from different control channel portions are not combined.

In some embodiments, the remote unit combines at least two control channel elements of the composite control channel, wherein each control channel element is of the type that contains only radio resource assignment information exclusively addressed to a single wireless communication entity. Combining may be required, for example, in instances where a cyclic redundancy check (CRC) or other information verification check fails after decoding a single control channel element, or instances where decoding is not successful. Generally, however, the remote unit may attempt to decode a control channel element without first combining.

In one embodiment, at least two of the control channel elements are combined by summing soft information derived from first and second codeword information, wherein the first codeword information is within a first control channel element and the second codeword information is within a second control channel element. In such a combination, the combined control channel elements are temporally aligned and superimposed (known as Chase combining). The superposition may involve max-ratio combining, or adding together log-likelihood-ratios (LLRs), or the like. The assumption here is that the first and second codeword information is addressed to the same remote unit. If not, either the decoding or the information verification check after decoding will be unsuccessful. In the case of failure, the remote unit may form a different combination of control channel elements, for example, by combining a different set of control channel elements or by combining an additional element.

In another embodiment, at least two of the control channel elements are combined by rearranging and summing soft information derived from different first and second codeword information, wherein the first codeword information is within a first control channel element and the second codeword information is within a second control channel element. For example, the first codeword and second codeword may comprise subsets of an information set and parity bits generated from a lower rate channel encoder. The subsets may be non-overlapping or partially overlapping. Soft information corresponding to overlapping codeword bit positions is typically summed in the remote unit, while non-overlapping bit positions are typically rearranged to an appropriate position for decoying

In one embodiment, the remote unit combines at least two control channel elements according to predefined combinations of control channel elements. For example, at least one of the pre-defined combinations includes a combination of at least two logically contiguous control channel elements. The logically contiguous control channel elements may or may not be physically contiguous. For example, if a set of sub-carriers distributed across frequencies (a comb) is used for one control channel element, another control channel element may or may not physically occupy the sub-carriers adjacent to the first control channel element. Or, if the logical and physical orderings of sub-carriers are identical, that is, there is a one-to-one mapping of logical and physical sub-carriers, then logical adjacency implies physical adjacency and vice versa. In other embodiments, at least two non-adjacent control channel elements are combined, wherein the non-adjacent control elements may be physical or logical.

In some implementations, the order in which the remote unit attempts to combine the control channel elements according to the pre-defined combinations is based on one or more hypotheses or assumptions. For example, the control channel elements may be combined based on a determination of the number of control channel elements constituting the composite control channel. Such a determination also includes determining the number of control channel elements constituting a particular type of control channel element in embodiments where the composite control channel includes more than one elements type as discussed above. The number of control channel elements may be determined, for example, based on the existence of control channel element number information included in the composite control channel. For example, the number of control channel elements may be determined based on a sequence of bits appended to the composite control channel. In one implementation, different bit sequences are indicative of different numbers of control channel elements. In another implementation, the location of the sequence of bits within the frame is indicative of the number of the control channel elements. In this latter implementation, the same bit sequence may be used to indicate different numbers of control channel elements depending on where the bit sequence is located within the frame. The number of control channel elements may also be determined based on data or messaging shared between a wireless communication device and a network infrastructure entity. This may occur in a message sent to all remote units via a broadcast channel sent occasionally or a broadcast message sent in each TTI. The number of control channel elements or subset of control channel elements that the remote unit should decode may also be sent via a message dedicated for that remote unit.

In one embodiment, control channels may be one or two control channel elements, with the size of the control element indicating the type of control element. Convolutional encoding may be used for the control elements. And the decoder may decode the first control element, check the CRC, and then stop decoding if the control element is designated for the user. If not, the decoding may commence from the point just prior to tail bit insertion on the first control element, through the end of the trellis comprised of both control elements. The CRC is again checked. In this way, control channel decoding may be achieved with less effort than if combined control elements were decoded from the beginning of the trellis. Note that the code rate for the single and two control elements must be the same in this embodiment.

In some embodiments, a portion of the composite control channel is allocated for assigning radio resources in each frame. In these embodiments, the unallocated portion of the control channel may be used for data transfer. Thus a wireless communication network infrastructure entity, for example, a scheduler, may allocate a portion of the control channel for assigning radio resources in each frame by embedding a bit sequence within the corresponding frame. In one embodiment, the location of the sequence of bits within the frame is indicative of the size of the control channel, for example, how many control channel elements are allocated for assigning radio resources to one or more remote units. In this implementation, the control channel elements may be addressed exclusively to a single remote unit or to more than one remote unit. More generally, the network infrastructure entity may dynamically change the portion of the control channel for assigning radio resources in each frame by changing the bit sequence or the location bit sequence embedded in each frame before transmitting the frames. As suggested above, moreover, the network infrastructure entity may also dynamically allocated different types of control channel elements and the number thereof within a frame.

In another embodiment, the bit sequence embedded within the sub-frame is used to identify that the control channel element is for a remote unit. In this case, the bit sequence embedded within the sub-frame may be a data dependent bit sequence, such as a CRC processed with wireless communication device identification information, the codeword masked with wireless communication device identification information or the like. In this embodiment, a first sub-frame, which may be the last sub-frame of a TTI, contains control information including modulation type, resources, or antenna mode indicator. Each control channel may be one or more control channel elements, and the size of the control channel may be different in the first and second sub-frames. The second sub-frame may occur on the same or different portions of the control channel as the control information from the first sub-frame. If a different portion of the sub-frame is used, blind decoding complexity may be reduced by having the control channel elements in the second sub-frame known from the location of the remote units control channel elements in the first sub-frame.

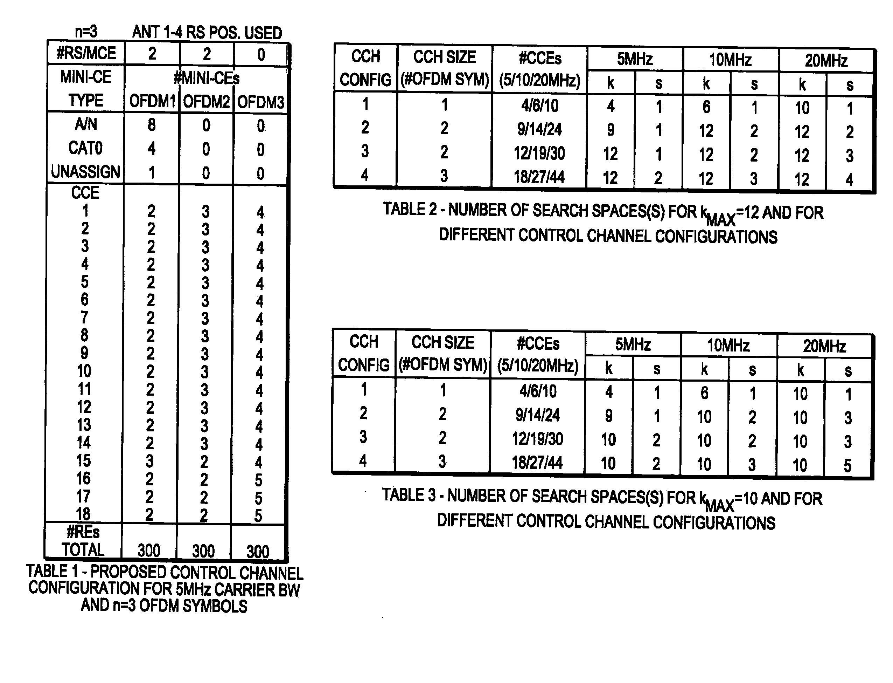

In the process diagram 900 of FIG. 9, the wireless communication network infrastructure entity, for example the base units 101, 102, determine a mobile identifier at step 902 that is unique to a remote unit. The unique identifier can be generated by base unit or received from the mobile, and preferably in the ordinary course of mobile attach but alternatively as a separate operation. The network at step 904 determines a candidate set of control channel elements for the particular remote unit. The base unit then selects from the candidate set control channel elements for the remote unit in step 906. Control information is then communicated to the remote unit in the selected control channel elements.

As mentioned above, a portion of the control channel is for assigning radio resources in each frame by embedding a bit sequence within the corresponding frame for use by the remote unit. Allocating a portion of the control channel includes allocating all available portions of the control channel or less than all available portions thereof, wherein the unallocated portion may be used for other purposes, for example, data transfer. A wireless communication network infrastructure entity such as a base unit can dynamically change the portion of the control channel for assigning radio resources in each frame, wherein multiple frames constitutes a radio frame. According to this aspect of the disclosure, potentially, a different portion of each control channel in each frame, constituting the radio frame, may be allocated to assigning radio resources. The portion of the control channel for assigning radio resources in each frame may be changed dynamically by changing the location of the bit sequence embedded in each frame or by using different bit sequences, as discussed above.

Generally, different frames constituting a radio frame may allocate different portions of the corresponding control channels for radio resource assignment. In one implementation, a wireless communication device, comprises a receiver capable of receiving a frame corresponding to a transmission time interval, wherein the frame includes a control channel and a bit sequence embedded within the frame. A controller communicably coupled to the receiver is configured for determining a portion of the control channel used for radio resource assignment based on where the corresponding bit sequence is embedded within the received frame, wherein the portion of the control channel used for radio resource assignment may be less than the entire control channel.

The base unit determines a portion of the control channel used for radio resource assignment in each frame based on where the corresponding bit sequence is embedded within the frame. Generally, the portion of the control channel used for radio resource assignment may be less than the entire control channel and each frame may use different portions of the control channel for radio resource assignment based upon where the corresponding bit sequences is embedded within the frame.

In some instances, all control channel elements of the composite control channel communicate control channel information. In this particular embodiment, the absence of control channel element number information, e.g., a bit sequence embedded within the frame, is indicative of the use of the full composite control channel for radio resource assignment. For example, in the absence of control channel element number information, the remote unit may assume a default number of control channel elements are used for assigning radio resources.

Thus it can be seen that the maximum number of blind detections is reduced by creating multiple search spaces that are better matched for the maximum number of CCEs needed to support the required maximum number of scheduled remote units in a subframe. The signaling defined can dynamically indicate the control region size and search space layout on a subframe by subframe basis. Determination of the number of search spaces and which are for downlink and which are for uplink are determined from information indicated dynamically by CCFI (or PCFICH included in each subframe), semi-statically by the base unit (the base unit assigns the mobile identifier), and statically based on the LTE bandwidth mode (the carrier) and control channel configuration (1, 2, 3, or 4).

Another aspect of the invention addresses the need to decrease the *average* number of blind decoding attempts while not missing a control channel that is intended for the UE. This is especially important for larger bandwidth, e.g., 5 MHz to 20 MHz, where the number of candidate CCHs is high (e.g., 30-40). The average energy level of a L1/L2 control channel may be different for different users' control channels. The energy per resource element (EPRE) (the transmitted energy of a resource element, not including the energy in the cyclic prefix, which is the expected energy of the RE, where the expectation is over the possible modulation states) of the RE in the L1/L2 control channel may also vary between RE. However, it may be desired to, whenever possible, have the EPRE of the control channel RE the same or similar in order to reduce the average number of blind detections. It may be advantageous for the UE to assume that the EPRE for a L1/L2 control channel REs are the same. In this case, any energy for DL RS taken from other CCE REs with non-zero energy is taken from all CCE REs evenly.

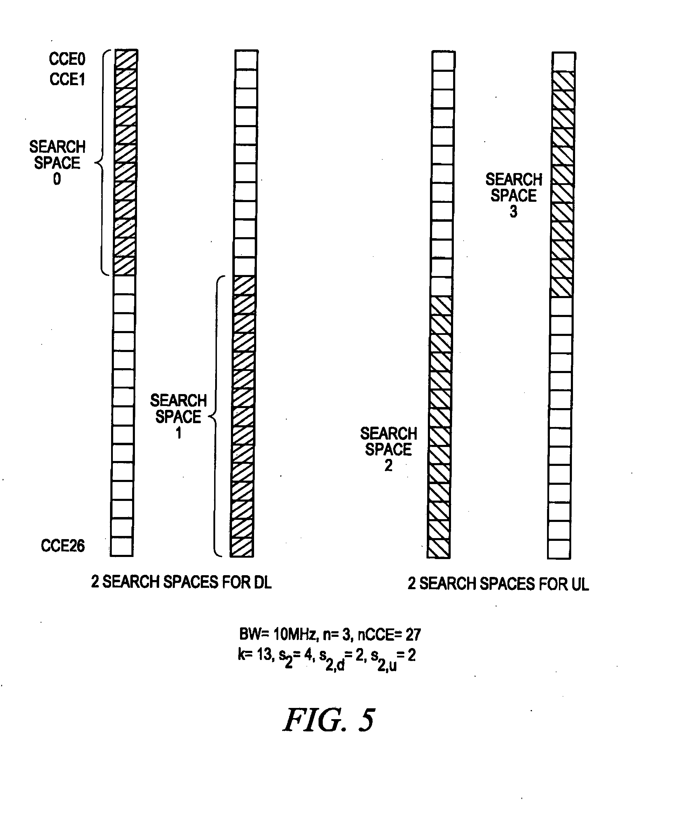

The average number of blind detections may be reduced by using the fact that two CCEs with significantly different received energy levels are unlikely to belong to the same control channel. CCE energy level can therefore be used to eliminate certain CCH candidates from consideration. FIG. 5 shows an example with 4 CCEs. If CCE0 and CCE2 have significantly different received energy, it can be concluded that control channels of size 3 and 4 are not viable, and only the two control channels of size 2 need be checked in addition to the size 1 control channels. Since the channel and interference may both contribute to different received energy, a threshold is used to ensure no valid control detection is missed. This reduces the average number of blind decoding attempts.

At the UE, the controller 116 can pre-measure the average energy level of the different control channel elements to reduce the set of possible blind detections. For example, CCE0 and CCE1 may have similar energies, which are different than that of CCE2, which is also different than the energy of CCE 3. Blind detections of CCE0 to CCE3 (1 CCE) and CCE0+CCE1 occur. Blind detections of CCE2+CCE3, and the control channels including 3 and 4 CCEs do not occur. The UE can also measure the average energy level of the CCEs as they are aggregated and decoded, to limit the number of subsequent blind detections. In the preferred case, single CCE control channels are first decoded, then valid 2 CCE control channels, then valid 3 CCE control channels, the valid 4 CCE control channels, etc.

At eNodeB, the different user's control channels can be arranged such that CCEs with different average energy are mixed together. This would be preferred over arranging the CCEs in order from least to most energy, as the changes in that case might be more gradual.

CCE energy measurement can be advantageously combined with using reported CQI information (instantaneous or average) to also reduce the maximum number of blind decodings. CQI can be used to minimize the maximum number of blind detections where a UE only looks at CCH candidates of size 1,2,3 CCEs if its reported CQI is above a threshold and 3,4,8 CCEs if it is below a threshold. This puts a restriction on the scheduler with regard to CCE allocation but is in line with the normal CCE allocation procedure of allocating more CCEs with lower CQI being reported.

One procedure for combining would be to first determine the set of possible CCH candidates based on CQI (e.g., {1,2,3} CCEs OR {3,4,8} CCEs) then use CCE energy measurement on the smaller CCE combinations to possibly preclude control channels having larger CCE combinations. Alternatively, in order to not miss any possible control channels, the CQI can be used to define an ordering of the CCH candidates - e.g., first look in the set most likely based on CQI (performing energy measurements), then look in the other sets. This search order can reduce the average number of detections in both the cases when a control channel is present (CQI especially useful) and not present (energy detection especially useful).

The energy approach is especially useful when combined with CQI in that it allows the eNodeB to assign a number of CCEs that is not consistent with reported CQI. This may occur when the eNodeB feels the CQI may vary or when fewer UE control channels need be sent and more CCEs can be used for improved reliability. As an example, a UE may be given all left over CCEs to UEs such that a UE might be assigned 8 CCEs even though it only needed 1 CCE, whereas typically UE in poor condition might expect 3, 4, or 8 CCEs (or just 8 if really poor CQI) and the UE in good condition expects 1 to 2 CCEs. The good condition UE could consider the larger combination of CCEs only if the energy condition is appropriate (consistent).

It is envisioned that this aspect may work best if the energy per resource element for each of the REs in the control channel is the same (more stable average). However, it can also work when the energy may vary due to some energy from the control channel being used for DL RS on some symbols. If such flexibility is allowed, another aspect of the invention may be to either minimize the number of CCEs that have different RE energy or spread the energy used for DL RS over all CCEs equally.

It is further envisioned that this aspect requires measurement of received energy, which is a combined effect of the transmit energy and the channel attenuation. For DL, since the REs of a CCE is distributed approximately evenly across time and frequency, the effect of varying channel attenuation is largely averaged out since a CCE is likely to be composed of at least 36 REs. Thus the main difference in the received energy of a CCE comes from the transmit energy difference, if any.

As discussed, two thresholds need to be set in this embodiment. One for the energy level difference between CCEs and one for CQI. These thresholds need to be set carefully to be effective. For the energy level difference, if the threshold is set too high, the number of blind detections may not be reduced; if the threshold is set too low, the assigned CCH may be missed. There could be another threshold were no BD is performed at all if no CCEs have enough energy. The expected received energy level may be based on reported CQI and estimated path loss (part of uplink power control) conditioned on #CEs in CCH candidate being considered.

It is further envisioned that with this embodiment of the invention, when using CQI the UE could condition its search on both its last reported CQI and/or its CQI history since the scheduler could decide that although the channel has improved for the UE it might only be a temporary channel condition and therefore it should be conservative and given more CCEs than expected for the current reported CQI. In fact it might average CQI from multiple reports and therefore the UE would either need to know the averaging window and/or assume that the scheduler is indeed conservative and that it will take several CQI reports above a threshold before it can safely only look for CCH candidates of 1 or 2 CCEs (for example) instead of candidates of 1,2,3,4 CCEs.

In another embodiment, a specific range of CCE locations in a PDCCH search space can be assigned for specifically capable UEs which would search for precoded PDCCHs after indicating that capability to the network and precoding had commenced to be applied to the PDCCH.

One approach is to map each precoding vector of rank 1 from each of the 16 matrix entries of the precoding codebook to a specific range of CCEs in a PDCCH search space. This allows the UE to not have to blindly detect the precoding vector used (i.e. this is implicitly determined by the CCE range used to form precoded PDCCH candidates) but instead only have to blindly detect the candidate in terms of the number of CCEs used. Where only two precoding vectors of rank 1 are used corresponding to the UE reported PMI or a 'default PMI' this approach becomes quite simple.

In another embodiment, the precoded PDCCH capable UE would blindly detect each PDCCH candidate in terms of each set of possible CCE locations as well as each possible precoding vector that could be used. This means the number of blind detections goes up by 16 for 16 possible precoding vectors. UEs specifically capable of handling this extra processing load and ability to perform precoding blind detection would communicate this ability to the eNB at call setup. The #BDs can be reduced by assigning certain CCE ranges to a small subset of the precoding vectors. This subset could be signalled via layer 3 messaging in a semi-static manner. Otherwise the subset could be broadcast (e.g. using the D-BCH in LTE).

Finally, in one embodiment, the procedure for control channel candidate search space determination and assignment is given by the following procedure:
1. K,Kdl,Kul,Sdl,Sul are signaled (by means of the SU-1 system information block broadcast via D-BCH) or predetermined for each n
2. One constraint in determining Kdl and Kul is that #BDs(K)<18 where K=max(Kdl,Ku1). If #BDs(K) is larger than 18 then mobile station complexity becomes unacceptable and CRC falsing is too high.
3. Another constraint in determining Kdl and Kul is that Kdl>Kul given larger payload size of DL SG compared to UL SG
4. Hence, e.g. Kdl=8, Kul=6 are chosen for coverage, max #BD (UE complexity) and CRC falsing issues
5. n is signaled (PCFICH indicates at least n and is broadcast in 1st ofdm symbol of each subframe)
6. A list of size nCCEs contains all CCEs of a control region logically mapped in sequential order
7. nCCEs and CCE location (in logically mapped list from 5.) is determined from n, BW, CCH_config
   a. BW is signaled via P-BCH
   b. CCH_config is determined from #TX antennas used in control region, n, DL A/N RE size, PCFICH RE Size, DL RS format (included whether unused antenna RS REs are punctured or used for CCEs).
8. If nCCE <=K then only one SP in control region and it is used for both UL and DL formats
   a. i.e. UL and DL SP are 100% overlapped
9. If nCCE > K then at least one size Kul SP of primarily UL format & one size Kdl SP of DL format.
   a. i.e. UL & DL SP < 100% overlapped
10. S = ceiling(nCCE/K) and Sdl+Sul =S,
11. DL SP of Kdl CCEs start at top of sequential list of logically mapped CCEs and go down
   a. there is no overlap of DL SP since Kdl and Sdl are chosen such that Kdl*Sdl < nCCE
12. UL SP of size Kul CCEs start at bottom of logically mapped CCE list and go up
   a. there is no overlap of UL SPs since Kul and Sul are chosen such that Kul*Sul < nCCE
   b. the amount of overlap of DL and UL SP regions is given by Kdl*Sdl+ Kul*Sul - nCCE
13. All UEs know the RE locations for each CCE, PCFICH, DL A/N, as well as each RS and know which CCEs map to which SPs
14. A UE is assigned to one of each of a DL format SP and a UL format SP. If more than one SP of a given format exists then a UE is assigned to primarily one of them using a common hashing function known at the UE and eNB based on its assigned unique identity (UEID) such as C-RNTI, PUCCH#, etc.
15. A simple hashing function based on UEID could be: e.g. SP number = UEID modulo Sdl or UEID modulo Sul

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the invention, which are to be limited not by the exemplary embodiments but by the appended claims.

Acronym list:
UEID - Unique mobile identifier -
ESN - electronic serial number
UL- uplink,
DL -downlink,
AICH, access indicator channel
PICH, paging indicator channel
D-BCH, dynamic broadcast channel
CQI - channel quality indicator
PMI - precoding matrix indicator (or index)
CCFI - control channel format indicator
CCE - control channel element - fixed size defined by time slot and frequency sub-band, made up of a fixed number of resource elements (for example 36 modulation symbols)
   - RE - resource element- modulation symbol
   - SP - control channel candidate search space
   - Kdl = K_{DL} - number of CCEs in each SP of primarily downlink (PDCCH) format
   - Kul = KUL - number of CCEs in each SP of primarily uplink (PDCCH) format
   - Sdl = S_{DL} - number of SPs of primarily downlink format
   - Sul - S_{UL} number of SPs of primarily uplink format
   - *n* - #ofdm symbols in control region; n can index into different (Kdl,Kul,Sdl,Sul) sets
   - CCEs - total number of CCEs in a control region.
   - CCEs in a SP are aggregated {1,2,[3],4,8} to from PDCCHs
   - BW - carrier bandwidth signaled via P-BCH
   - CCH_config - control channel configuration characterized by #TX antennas used in control region, n, DL A/N RE size, PCFICH RE size, and DL RS format used.
   - K - max(Kdl,Kul)
   - S = Sdl + Sul = ceiling (nCCE/K) - total number of SPs
   - #BDs - number of blind detections
   - RS - reference symbol

## Claims

1. A method in user equipment (103, 110) for identifying one or more candidate control channel elements for control information, the method comprising:
determining from a channel quality indicator and received energy levels of control channel elements a set of candidate control channel elements for use in blind decoding by the user equipment (103, 110); and
searching only control channel elements in said set of candidate control channel elements to identify the control information.

2. The method as defined in claim 1, including using a first threshold for received energy levels measurements, the first threshold used for determining said set of candidate control channel elements.

3. The method as defined in claim 2, wherein the first threshold is used for a received energy level difference between control channel elements, the set of candidate channels being determined at least in part on the difference between at least two control channel elements exceeding the first threshold.

4. The method as defined in any one of claims 1, 2 or 3, further including a second threshold for channel quality indicator measurements, the second threshold used for determining said set of candidate control elements.

5. The method as defined in claim 4, including selecting said set of candidate control channel elements based on the last reported channel quality indicator compared to said second threshold.

6. The method as defined in claim 4, including selecting said set of candidate control channel elements based on the average channel quality indicator compared to the second threshold.

7. The method as defined in claim 4, including requiring multiple channel quality indicator reports above the second threshold before searching only control channel candidates in a subset of a larger group of control channel elements, following a period where channel candidates of said larger group of control channel elements are searched.

8. The method as defined in any one of the preceding claims, further including a third threshold, wherein no blind detection is performed if all of the received energy levels of control channel elements are below the third threshold.

9. A user equipment (103, 110) including a transceiver and controller, the controller being adapted to perform the method as defined in any preceding claim.

## Patentansprüche

1. Verfahren in Endgeräten (103, 110) zur Festlegung eines oder mehrerer Kandidat-Steuerkanalelemente für Steuerinformationen, wobei das Verfahren die folgenden Schritte umfasst:
Bestimmung aus einer Kanalqualitätsanzeige und empfangener Energiepegel von Steuerkanalelementen eines Satzes von Kandidat-Steuerkanalelementen zur Verwendung bei der Blinddecodierung durch das Endgerät (103, 110); und
Suche nur nach Steuerkanalelementen in dem Satz von Kandidat-Steuerkanalelementen zur Bestimmung der Steuerinformationen.

2. Verfahren nach Anspruch 1, wobei das Verfahren die Verwendung eines ersten Schwellenwerts für empfangene Energiepegel-Messungen einschließt, wobei der erste Schwellenwert zur Bestimmung des Satzes von Kandidat-Steuerkanalelementen verwendet wird.

3. Verfahren nach Anspruch 2, wobei die erste Schwelle für eine empfangene Energiepegeldifferenz zwischen Steuerkanalelementen verwendet wird, wobei der Satz von Kandidatkanälen zumindest teilweise aus der Differenz zwischen mindestens zwei Steuerkanalelementen, welche den ersten Schwellenwert überschreiten, bestimmt wird.

4. Verfahren nach einem der Ansprüche 1, 2 oder 3, welches des Weiteren einen zweiten Schwellenwert für Kanalqualitätsanzeige-Messungen einschließt, wobei der zweite Schwellenwert zur Bestimmung des Satzes von Kandidat-Steuerelementen verwendet wird.

5. Verfahren nach Anspruch 4, welches die Auswahl des Satzes von Kandidat-Steuerkanalelementen basierend auf der letzten gemeldeten Kanalqualitätsanzeige verglichen mit dem zweiten Schwellenwert einschließt.

6. Verfahren nach Anspruch 4, welches die Auswahl des Satzes von Kandidat-Steuerkanalelementen basierend auf der durchschnittlichen Kanalqualitätsanzeige verglichen mit dem zweiten Schwellenwert umfasst.

7. Verfahren nach Anspruch 4, welches die Anforderung mehrerer Kanalqualitätsanzeige-Berichte oberhalb der zweiten Schwelle einschließt, bevor nur Steuerkanalkandidaten in einer Teilmenge einer größeren Gruppe von Steuerkanalelementen durchsucht werden, folgend einer Zeitperiode, in der Kanalkandidaten der größeren Gruppe von Steuerkanalelementen durchsucht werden.

8. Verfahren nach einem der vorhergehenden Ansprüche, welches des Weiteren einen dritten Schwellenwert einschließt, wobei keine Blinddetektion erfolgt, wenn alle empfangenen Energiepegel von Steuerkanalelementen unterhalb des dritten Schwellenwerts liegen.

9. Endgerät (103, 110), welches einen Transceiver und einen Controller einschließt, wobei der Controller zur Ausführung des Verfahrens nach einem der vorhergehenden Ansprüche ausgelegt ist.

## Revendications

1. Procédé dans un équipement utilisateur (103, 110) pour identifier un ou plusieurs éléments de canal de commande candidat pour l'information de commande, le procédé comprenant :
déterminer à partir d'un indicateur de la qualité du canal et de niveaux d'énergie reçus d'éléments de canal de commande un ensemble d'éléments de canal de commande candidats utilisé pour le décodage en aveugle par l'équipement utilisateur (103 ; 110) ; et
rechercher seulement des éléments de canal de commande dans ledit ensemble d'éléments de canal de commande candidats pour identifier l'information de commande.

2. Procédé selon la revendication 1, incluant l'utilisation d'un premier seuil pour les mesures de niveaux d'énergie reçues, le premier seuil étant utilisé pour déterminer ledit ensemble d'éléments de canal de commande candidats.

3. Procédé selon la revendication 2, dans lequel le premier seuil est utilisé pour une différence de niveau d'énergie reçue entre les éléments de canal de commande, l'ensemble de canaux candidats étant déterminé au moins en partie sur la différence entre au moins deux éléments de canal de commande dépassant le premier seuil.

4. Procédé selon l'une quelconque des revendications 1, 2 ou 3, incluant en outre un deuxième seuil pour des mesures d'indication de la qualité du canal, le deuxième seuil étant utilisé pour déterminer ledit ensemble d'éléments de commande candidats.

5. Procédé selon la revendication 4, incluant la sélection dudit ensemble d'éléments de canal de commande candidats sur la base de l'indicateur de la qualité du canal rapportée en dernier, comparée audit deuxième seuil.

6. Procédé selon la revendication 4, incluant la sélection dudit ensemble d'éléments de canal de commande candidats sur la base de l'indicateur de la qualité du canal moyenne en comparaison avec le deuxième seuil.

7. Procédé selon la revendication 4, incluant la requête de multiples rapports de l'indicateur de la qualité du canal au-dessus du deuxième seuil avant de rechercher seulement des candidats de canal de commande dans un sous-ensemble d'un groupe plus grand d'éléments de canal de commande, à la suite d'une période où les candidats de canal dudit groupe plus grand d'éléments de canal de commande sont recherchés.

8. Procédé selon l'une quelconque des revendications précédentes, incluant en outre un troisième seuil, dans lequel une détection à l'aveugle n'est pas exécutée si tous les niveaux d'énergie reçus des éléments de canal de commande sont en dessous du troisième seuil.

9. Equipement utilisateur (103, 110) incluant un émetteur-récepteur et un dispositif de commande, le dispositif de commande étant apte à exécuter le procédé tel que défini dans l'une quelconque des revendications précédentes.
